# EUROPÄISCHE PATENTSCHRIFT

(11) **EP 3 219 287 B1**
(45) Veröffentlichungstag und Bekanntmachung des Hinweises auf die Patenterteilung: **26.07.2023**
(21) Anmeldenummer: 17000382.6
(22) Anmeldetag: 09.03.2017
(51) Int. Cl.: A61C 8/00, A61C 13/00

(54) **OPTIMIERUNG VON SUPRAKONSTRUKTIONEN BZW. MESIOKONSTRUKTIONEN BEI ZAHNPROTHESEN**
OPTIMIZATION OF SUPRASTRUCTURES OR MESIO STRUCTURES IN DENTAL PROSTHESES
OPTIMISATION DE SUPRACONSTRUCTIONS OU MÉSIOSTRUCTURES POUR DES PROTHÈSES DENTAIRES

(30) Priorität: 14.03.2016 DE 102016003084
(43) Veröffentlichungstag der Anmeldung: 20.09.2017
(73) Patentinhaber: CADFEM International GmbH, 85567 Grafing b. München (DE)
(72) Erfinder: Müller, Christoph, 81827 München (DE); Bonitz, Lars, 58454 Witten (DE); Volf, Alexander, 81735 München (DE)
(74) Vertreter: Bosch Jehle Patentanwaltsgesellschaft mbH

(56) Entgegenhaltungen:
- EP-A2- 1 568 335
- WO-A1-2015/111766
- DE-A1-102005 005 656
- KR-A- 20150 010 119
- US-A1- 2008 206 710
- US-A1- 2013 316 302

## Beschreibung

Die Erfindung betrifft ein Verfahren und eine Vorrichtung zum Erstellen einer Geometrie einer Suprakonstruktion bzw. Mesiokonstruktion für Zahnprothesen.

Des Weiteren betrifft die Erfindung ein computerlesbares Medium mit durch einen Computer ausführbaren Programm-Code-Anweisungen zum Ausführen eines derartigen Verfahrens, sowie ein Computerprogramm mit Programmcode-Mitteln zum Durchführen eines derartigen Verfahrens, wenn das Programm auf einem Computer ausgeführt wird.

Außerdem betrifft die Erfindung eine Suprakonstruktion bzw. Mesiokonstruktion, die unter Verwendung der beim erfindungsgemäßen Verfahren erzeugten Daten hergestellt wird.

Im Stand der Technik sind unterschiedliche Arten von Zahnprothesen bekannt.

Unterschieden wird beispielsweise zwischen herausnehmbaren Zahnprothesen, und festsitzenden Zahnprothesen.

Beide Arten von Zahnprothesen können sowohl an noch vorhandenen, überkronten Zähnen und/oder an Implantaten fixiert werden. In vielen Fällen, insbesondere bei Prothesen, die eine größere Anzahl an der Pfeilern (Zahnstümpfe, Zahnimplantate, oder Stiftaufbauten) erfordern und/oder eine größere Anzahl fehlender Zähne ersetzen sollen, ist es nicht möglich oder sinnvoll, die Zahnprothese direkt an den Pfeilern zu befestigen. In diesen Fällen wird eine Mesiokonstruktion, oder manchmal auch Suprakonstruktion bezeichnet, an den Pfeilern befestigt und die Prothese selbst wird an der Mesiokonstruktion fixiert.

Üblicherweise erfolgt nach Präparation der Pfeiler (Zahnstümpfe, Zahnimplantate, oder Stiftaufbauten) zunächst eine "Abformung" der Situation im Mund im Bereich des herzustellenden Zahnersatzes, z.B. mittels eines entsprechenden Negativ-Abdrucks, welcher in einem Dentallabor in ein Positiv-Modell, z.B. ein Gips-Modell umgewandelt wird, das genau der Situation im Mund entspricht.

Alternativ kann der Mundinnenraum auch mit Hilfe eines 3D-Oberflächenscans "vermessen" werden, wobei zweckmäßigerweise ein Intra-Oral-Scanner verwendet wird. Daraufhin erstellt ein CAD-Konstrukteur, wie z.B. ein Zahntechniker, meist mit erheblichem Aufwand, ein Computermodell einer geeigneten Mesiokonstruktion für die Zahnprothese. Dies kann beispielsweise manuell mit Hilfe eines CAD-Programms erfolgen. Dabei werden unter Berücksichtigung vorhandener Befestigungsmöglichkeiten für die Mesiokonstruktion, wie z.B. noch erhaltene Zähne oder bereits vorhandene Implantate, die Zahl und Anordnung weiterer benötigter Befestigungspunkte, insbesondere Implantate, festgelegt. Bei der Dimensionierung der Mesiokonstruktion und der Definition der (zusätzlich) benötigten Implantate stützt sich der Zahntechniker üblicherweise auf sein Wissen und seine Erfahrung oder auch auf Erfahrungswerte anderer Zahntechniker. Die jeweiligen individuellen biomechanischen Eigenschaften des Kiefers werden dabei jedoch kaum oder zumindest zu wenig berücksichtigt und auch die Statik der Mesiokonstruktion wird in den meisten Fällen nicht exakt berechnet.

Dies kann insbesondere zur Folge haben, dass Implantate gesetzt werden, welche keine Last aufnehmen, d.h. Implantate, auf die beim Kauen mit eingesetzter Zahnprothese fast überhaupt keine oder nur sehr geringe Kräfte wirken, und somit eigentlich als überflüssig einzuschätzen sind.

Zudem werden die Mesiokonstruktionen oder Teile hiervon vom jeweiligen Zahntechniker häufig stärker dimensioniert, als physikalisch erforderlich wäre, um sicherzustellen, dass die Mesiokonstruktion auf jeden Fall ausreichend stabil ist. Dies führt zu Mehrkosten, und kann sich auch in ästhetischer Hinsicht nachteilig auswirken.

US 2008/206710 A1 offenbart ein Verfahren zum Erstellen einer Geometrie einer Mesiokonstruktion für eine Zahnprothese mit Hilfe eines Softwareprogramms, wobei Regeln benutzt werden, um diese Geometrie automatisch zu erstellen, aber nicht, um automatisch Bereiche, welche nicht oder nur unwesentlich zur Lastaufnahme beitragen, aus der Geometrie der Mesiokonstruktion zu entfernen.

Der Erfindung liegt u.a. die Aufgabe zugrunde, ein neuartiges Verfahren zum Erstellen einer Geometrie einer Mesiokonstruktion für Zahnprothesen bereitzustellen.

Die obengenannte Aufgabe wird erfindungsgemäß durch ein Verfahren zum Erstellen einer Geometrie einer Mesiokonstruktion für eine Zahnprothese gelöst, wobei das Verfahren die folgenden Schritte aufweist:
Empfangen von ersten 3D-Daten, welche einen 3D-Bauraum für eine Mesiokonstruktion definieren,
Empfangen von zweiten 3D-Daten, welche mögliche Positionen zum Fixieren der Mesiokonstruktion definieren,
Empfangen von dritten 3D-Daten, welche mögliche Positionen oder Bereiche zum Fixieren der Zahnprothese an der Mesiokonstruktion definieren, und
Erstellen einer optimierten Geometrie der Mesiokonstruktion mittels eines Optimierungsverfahrens, wobei, ausgehend von dem 3D-Bauraum, den möglichen Positionen zum Befestigen der Mesiokonstruktion und den möglichen Positionen oder Bereichen zum Fixieren der Zahnprothese an der Mesiokonstruktion, die Geometrie der Mesiokonstruktion unter Anwendung der physikalischen Gesetze, insbesondere Gesetze der Mechanik, optimiert wird.

Zweckmäßigerweise kann als Optimierungsverfahren ein Topologieoptimierungsverfahren verwendet werden, wobei die optimierte Geometrie der Mesiokonstruktion vorteilhafterweise mit einem Computer unter Zuhilfenahme des Topologieoptimierungsverfahrens berechnet werden kann.

Optimierungsverfahren erlauben es, Geometrien in Bezug auf definierte Zielgrößen zu optimieren. Dabei lassen sich Vorgaben, insbesondere Zielfunktionen und Zwangsbedingungen, welche später noch näher erläutert werden, definieren, die bei der Optimierung berücksichtigt werden sollen. Ein solches Optimierungsverfahren ist z.B. die Topologieoptimierung. Dabei werden ein Bauraum, ein Belastungsszenario , z.B. eine Last oder mehrere Lasten, ein Lastkollektiv oder mehrere Lastkollektive oder eine Verschiebung oder mehrere Verschiebungen, und gegebenenfalls mögliche Fixpunkte, die Teil der optimierten Mesiokonstruktion sind, vorgegeben. Eine einzelne Last kann eine statische Beißkraft bzw. Verschiebung sein, während ein Lastkollektiv eine Serie von Belastungen, Kräften oder Verschiebungen bezeichnet, die während eines Kauzyklus entstehen bzw. die einen Kauzyklus abbilden sollen.

Hierbei wird entweder angenommen, dass die Kraft- bzw. Lasteinleitung über die möglichen Positionen zum Fixieren der Mesiokonstruktion und die Kraftableitung bzw. Lastableitung über die möglichen Positionen oder Bereiche zum Fixieren der Zahnprothese an der Mesiokonstruktion erfolgt, oder dass die Kraft- bzw. Lasteinleitung über die möglichen Positionen oder Bereiche zum Fixieren der Zahnprothese an der Mesiokonstruktion und die Kraftableitung bzw. Lastableitung über die möglichen Positionen zum Fixieren der Mesiokonstruktion erfolgt.

Für das Erstellen einer biomechanisch optimierten Geometrie der Mesiokonstruktion mittels Topologieoptimierung wird ein dreidimensionaler Bauraum vorgegeben, welcher zweckmäßigerweise die maximale räumliche Ausdehnung der Mesiokonstruktion definiert. Vorteilhafterweise gibt der behandelnde Zahnarzt oder Kieferchirurg den 3D-Bauraum unter Berücksichtigung praktischer und ästhetischer Gesichtspunkte vor. So wäre theoretisch erst einmal der gesamte Mundinnenraum als Bauraum denkbar, jedoch sollte die Prothese noch geeignet positionierbar sein, die Zunge genügend Raum und Bewegungsfreiheit haben und die Mesiokonstruktion im Normalfall nicht zu sehen sein. Folglich ist es zweckmäßig, dass der Zahnarzt / Kieferchirurg einen möglichst großen 3D-Bauraum, der jedoch noch die oben genannten Kriterien erfüllt, als Ausgangpunkt für die Optimierung vorgibt.

Alternativ kann auch eine Ausgangsform für eine Mesiokonstruktion als 3D-Bauraum vorgegeben werden.

Vorteilhafterweise wird die Geometrie der Mesiokonstruktion optimiert, indem Bereiche, welche nicht oder nur unwesentlich zur Lastaufnahme bzw. Lastabtragung beitragen, aus dem 3D-Bauraum entfernt werden, wobei die Bereiche, welche nicht oder nur unwesentlich zur Lastaufnahme bzw. Lastabtragung beitragen, ermittelt werden, indem die auf einzelne Bereiche der Mesiokonstruktion wirkenden Kräfte und/oder Verschiebungen simuliert werden. Hierbei wird eine Lastaufnahme, welche geringer als ein bestimmter Grenzwert ist als "unwesentliche Lastaufnahme" bzw. als "unwesentlicher Beitrag zur Lastaufnahme" bezeichnet, wobei der Grenzwert vorab definiert werden kann oder vom Anwender festgelegt werden kann.

Auf diese Weise wird, ausgehend von dem vorgegebenen 3D-Bauraum, in mehreren Iterationen, in welchen die Bereiche, welche nicht oder nur unwesentlich zur Lastaufnahme beitragen, aus dem verbleibenden 3D-Bauraum entfernt werden, die Geometrie der Mesiokonstruktion sukzessive optimiert.

Ferner werden für die Optimierung der Mesiokonstruktion mögliche Positionen zum Fixieren der Mesiokonstruktion definiert.

Die möglichen Positionen zum Fixieren der Mesiokonstruktion können mögliche Positionen für ein oder mehrere Implantate einschließen und/oder für den Fall, dass der Patient noch über mindestens einen eigenen Zahn verfügt, der sich, nach entsprechendem Präparieren, für ein Befestigen der Mesiokonstruktion eignet, die Position des vorhandenen Zahnes bzw. die Positionen der vorhandenen Zähne sein, der/die zum Fixieren der Mesiokonstruktion verwendet wird/werden.

Die mögliche(n) Position(en) für ein Einsetzen von einem Implantat oder mehreren Implantaten zum Fixieren der Mesiokonstruktion wird/werden vorteilhafterweise vom behandelnden Zahnarzt oder Kieferchirurgen vorgegeben. Der Zahnarzt/Kieferchirurg ermittelt die mögliche(n) Position(en) für ein Einsetzen von einem Implantat oder mehreren Implantaten zweckmäßigerweise anhand geeigneter Untersuchungen der Knochenstruktur des Oberkiefers und/oder Unterkiefers oder anhand bereits vorhandener Befunde, so dass ein zuverlässiges Fixieren der Mesiokonstruktion und damit ein guter Sitz der daran befestigten Prothese auch bei Belastung der Prothese gewährleistet ist.

Die Position(en) des noch vorhandenen Zahnes bzw. der noch vorhandenen Zähne, der/die sich, nach entsprechendem Präparieren, für ein Befestigen der Mesiokonstruktion eignet/eignen, gibt ebenfalls der Zahnarzt oder Kieferchirurg vor. Gegebenenfalls bestimmt er die aktuellen Positionen des vorhandenen Zahnes bzw. der vorhandenen Zähne nochmals, um eine größtmögliche Präzision zu erzielen. Werden zum Befestigen der Mesiokonstruktion, an welcher die Prothese fixiert werden soll, zusätzlich ein oder mehrere Implantate benötigt, so werden eine oder mehrere mögliche Positionen für diese vom Zahnarzt / Kieferchirurg, wie bereits oben beschreiben, vorgegeben.

Zudem werden für die Optimierung der Mesiokonstruktion mögliche Positionen oder Bereiche definiert, welche sich für ein Fixieren der Zahnprothese an der Mesiokonstruktion eignen.

Die Positionen oder Bereiche, an denen die Zahnprothese befestigt werden kann, hängen von der Art und Beschaffenheit, also der individuellen Ausgestaltung, der Zahnprothese und vom Mesiokonstruktionstyp, z.B. Steg, Geschiebe oder Sonderdesign, ab. Auch die Positionen oder Bereiche, an denen die Zahnprothese befestigt werden kann, werden vorteilhafterweise vom behandelnden Zahnarzt /Kieferchirurgen bzw. Prothetiker vorgegeben.

Sollte die jeweilige Mesiokonstruktion so beschaffen sein, dass die Position der Fixierpunkte bzw. Fixierbereiche für die Prothese variabel, also nicht fest vorgegeben sind, so kann auch die Anordnung dieser Fixierpunkte bzw. Fixierbereiche für die Prothese biomechanisch optimiert werden.

In einer bevorzugten Ausführungsform der Erfindung ist die Anzahl der möglichen Positionen für Implantate größer ist als die Anzahl der für das Fixieren der Mesiokonstruktion erforderlichen Implantate, so dass bei der Optimierung der Geometrie der Mesiokonstruktion diejenigen Positionen für Implantate aus der Gesamtzahl der möglichen Positionen für Implantate ermittelt werden können, welche am besten für das Fixieren der Mesiokonstruktion geeignet sind. Somit wird auch die Anordnung der Implantate für das Fixieren der Mesiokonstruktion biomechanisch optimiert, indem eine geeignete Untermenge an Positionen für Implantate aus der Gesamtzahl der möglichen Positionen für Implantate ermittelt wird. So kann einerseits beispielsweise eine mögliche Position für ein Implantat, an welchem keine oder keine wesentliche Lastaufnahme stattfindet, entfernt werden und andererseits eine zu hohe Belastung eines einzelnen Implantats bzw. eine zu hohe Lastaufnahme an einem einzelnen Implantat vermieden werden. Hierbei wird eine Lastaufnahme, welche geringer als ein bestimmter Grenzwert ist als "keine wesentliche Lastaufnahme" bezeichnet, wobei der Grenzwert vorab definiert werden kann oder vom Anwender festgelegt werden kann.

Vorteilhafterweise kann für die Optimierung der Geometrie der Mesiokonstruktion für ein Belastungsszenario mindestens eines der folgenden Ziele vorgegeben werden: Minimierung der Nachgiebigkeit der Mesiokonstruktion;
Minimierung der Verschiebung an einem Punkt oder Bereich;
Minimierung der Reaktionskraft an den möglichen Positionen zum Fixieren der Mesiokonstruktion; Minimierung des Volumens der Mesiokonstruktion und/oder Minimierung des Gewichts der Mesiokonstruktion.

Vorteilhafterweise kann bei der Optimierung der Geometrie der Mesiokonstruktion mindestens eine vorgegebene Bedingung berücksichtigt werden, wobei die mindestens eine vorgegebene Bedingung mindestens eine der folgenden Bedingungen einschließt: zulässige maximale Reaktionskraft an den möglichen Positionen zum Fixieren der Mesiokonstruktion;
zulässige maximale Reaktionskraft an den möglichen Positionen oder Bereichen zum Fixieren der Zahnprothese an der Mesiokonstruktion;
maximal zulässiges Volumen der Mesiokonstruktion;
maximal zulässiges Gewicht der Mesiokonstruktion;
zulässige maximale Nachgiebigkeit der Mesiokonstruktion; und/oder
zulässige maximale Spannungen.

Zusätzlich kann auch mindestens ein Fixpunkt der Geometrie der Mesiokonstruktion als zusätzliche Bedingung vorgegeben sein. Bei einer Vorgabe von mindestens einem Fixpunkt ist dieser mindestens eine Fixpunkt zwingend in der optimierten Geometrie der Mesiokonstruktion enthalten.

Hierbei kann die Optimierung der Geometrie der Mesiokonstruktion durch die Angabe einer zu erwartenden Maximalbelastung der gesamten Mesiokonstruktion oder, genauer gesagt, eines zu erwartenden maximalen Belastungsszenarios, bezüglich der Kau- bzw. Beißkraft der Person, für welche die Mesiokonstruktion und Zahnprothese angefertigt wird, individualisiert werden.

So kann die Mesiokonstruktion für eine Person mit eher geringer maximaler Beißkraft weniger stark bzw. kleiner dimensioniert werden, was insbesondere für Personen mit einem kleinen Mundinnenraum vorteilhaft ist. Umgekehrt kann für eine Person mit großer maximaler Beißkraft die Mesiokonstruktion stärker bzw. größer dimensioniert werden, um so eine Überbelastung einzelner Abschnitte der Mesiokonstruktion und damit ein Verformen oder gar Brechen der Mesiokonstruktion zu vermeiden.

Stehen verschiedene Materialien für die Mesiokonstruktion zur Wahl, so können deren Eigenschaften bei der Optimierung der Geometrie der Mesiokonstruktion mit einbezogen werden, indem die zulässige Maximalbelastung einzelner Abschnitte der Mesiokonstruktion an das jeweilige Material angepasst wird.

Ferner kann eine Überbelastung einzelner Implantate vermieden werden, indem eine zulässige maximale Reaktionskraft an den möglichen Positionen zum Fixieren der Mesiokonstruktion, also beispielsweise eine zulässige Maximalbelastung eines einzelnen Implantats, vorgegeben wird. Auch hier kann durch die Angabe einer zu erwartenden Maximalbelastung der gesamten Mesiokonstruktion oder, genauer gesagt, einer zu erwartenden maximalen Gesamtlastaufnahme über die möglichen Positionen zum Fixieren der Zahnprothese, die Optimierung der Mesiokonstruktion bezüglich der Beißkraft der Person, für welche die Mesiokonstruktion und Zahnprothese angefertigt werden, individualisiert werden.

Auch das Maximalvolumen bzw. Maximalgewicht der Mesiokonstruktion, zulässige maximale Spannungen und/oder eine zulässige maximale Nachgiebigkeit der Mesiokonstruktion können als zusätzliche Bedingung vorgegeben sein. So kann als zulässige maximale Nachgiebigkeit beispielsweise vorgegeben sein, dass sich die Prothese z. B. maximal um 1 mm an einem definierten Punkt oder Bereich (z.B. Ort der Fixierung von Prothese und Mesiokonstruktion) verschiebt oder deformiert.

Stehen verschiedene Materialien für die Mesiokonstruktion zur Wahl, so können diese auch hier bei der Optimierung der Geometrie der Mesiokonstruktion mit einbezogen werden, indem das Maximalgewicht, die zulässigen maximalen Spannungen und/oder die zulässige maximale Nachgiebigkeit der Mesiokonstruktion an das jeweilige Material angepasst wird/werden.

Bei Vorgabe einer Kombination verschiedener zusätzlicher, materialabhängiger Bedingungen, wie z.B. der zulässigen Maximalbelastung einzelner Abschnitte der Mesiokonstruktion, des Maximalgewichts der Mesiokonstruktion, der zulässigen Spannungen und/oder der zulässigen maximalen Nachgiebigkeit der Mesiokonstruktion, kann für jedes zur Verfügung stehende Material die zugehörige Kombination der an das jeweilige Material angepassten Bedingungen vorgegeben bzw. getestet werden. Somit kann bei der Optimierung der Geometrie der Mesiokonstruktion auch das zu verwendende Material "optimiert" werden, d.h. das für die individuellen Vorgaben für die Mesiokonstruktion am besten geeignete Material ermittelt werden.

Vorteilhafterweise können die obengenannten Ziele (Zielfunktionen) und Bedingungen (Zwangsbedingungen) in geeigneter Weise, d.h. sinnvoll, kombiniert werden.

So kann eine Minimierung der Nachgiebigkeit für. ein vorgegebenes Belastungsszenario und eine vorgegebene Volumenreduktion (z.B. 70%) erfolgen oder eine Minimierung des Volumens bzw. der Masse kann für eine zulässige maximale Spannung (und daraus abgeleitet die Lebensdauer) und/oder für eine zulässige maximale Reaktionskraft (z.B. 30N) an den Implantaten erfolgen.

Das zu erwartende maximale Belastungsszenario der jeweiligen Person kann mit einer individuellen Messung, einer Vorberechnung, z.B. mittels FEM, oder mit Hilfe von Fachliteratur ermittelt bzw. geschätzt werden.

Ferner können für die Optimierung auch fertigungstechnisch bedingte Einschränkungen für die Geometrie und/oder Struktur der Mesiokonstruktion vorgegeben sein. Soll die Mesiokonstruktion beispielsweise gefräst werden, so sollte die Geometrie der Mesiokonstruktion derart beschaffen sein, dass sie gefräst werden kann, also z.B. keine geschlossenen Hohlräume aufweisen.

Vorteilhafterweise werden bei der Optimierung der Geometrie der Mesiokonstruktion Bereiche, welche nicht oder nur sehr wenig zur Lastaufnahme beitragen, aus dem 3D-Bauraum entfernt. Im Optimierungsverfahren werden die mechanischen Belastungen z.B. mit dem Finite Elemente Verfahren (FEM) simuliert, um diejenigen Bereiche der Mesiokonstruktion zu ermitteln, welche nicht oder nur sehr wenig zur Lastaufnahme beitragen. So wird in einem iterativen Verfahren die Geometrie der Mesiokonstruktion, startend mit dem 3D-Bauraum, sukzessive verbessert bis eine biomechanisch optimierte Geometrie für die Mesiokonstruktion erlangt wird.

In einer weiteren bevorzugten Ausführungsform kann die Mesiokonstruktion Teil einer einteiligen Konstruktion sein, welche die Mesiokonstruktion und einen Zahnersatz umfasst. So kann bei einer einteiligen Ausführung von Mesiokonstruktion und Zahnersatz die Geometrie des Teils, der der Mesiokonstruktion entspricht, mit Hilfe des erfindungsgemäßen Verfahrens optimiert werden. Vorteilhafterweise wird für die Optimierung der Geometrie der Mesiokonstruktion eine geeignete Kombination aus den Zielen für die Optimierung und den Bedingungen für die Optimierung gewählt.

Gemäß einem weiteren Aspekt der Erfindung wird ein Verfahren zum Herstellen einer Mesiokonstruktion für eine Zahnprothese bereitgestellt, wobei das Verfahren die folgenden Schritte aufweist:
Erstellen einer Geometrie einer Mesiokonstruktion für eine Zahnprothese gemäß dem in den vorhergehenden Absätzen definierten und erläuterten Verfahren zum Erstellen einer Geometrie einer Mesiokonstruktion für eine Zahnprothese und
Fertigen der Mesiokonstruktion für eine Zahnprothese basierend auf der erstellten Geometrie der Mesiokonstruktion für eine Zahnprothese mit Hilfe eines Fertigungsverfahrens, z.B. mittels eines generativen/additiven Fertigungsverfahrens oder mittels Fräsen.

Zweckmäßigerweise kann die Mesiokonstruktion aus einem Metall bzw. einer Metalllegierung, einem Kunststoff oder einer Keramik gefertigt werden.Vorteilhafterweise können Kobalt, Chrom, Molybdän, Titan, oder Legierungen dieser Metalle mit einem weiteren Metall, insbesondere Molybdän, verwendet werden. Ferner können Zirkoniumoxid oder auch Kunststoffe verwendet werden, welche mundverträglich und nicht-toxisch sind.

Für das Fertigen bzw. Herstellen der Mesiokonstruktion basierend auf der zuvor erstellten Geometrie der Mesiokonstruktion für eine Zahnprothese kann abhängig von dem gewünschten Material für die Mesiokonstruktion ein geeignetes Fertigungs- bzw. Herstellungsverfahren gewählt werden. Dies können generative Fertigungsverfahren, auch additive Fertigungsverfahren oder 3D-Druck genannt, wie z.B. Sintern, Lasersintern, selektives Laserschmelzen oder Elektronenstrahlschmelzen für Metalle und Metalllegierungen und Stereolithographie oder Fused Deposition Modeling für Kunststoffe sein. Mesiokonstruktionen aus Metall oder Metalllegierungen können auch gefräst werden, wobei hier die fertigungstechnisch bedingten Einschränkungen beim Fräsen vorteilhafterweise schon beim Erstellen der Geometrie der Mesiokonstruktion berücksichtigt werden.

Generative Fertigungsverfahren haben gegenüber anderen Fertigungsverfahren, wie z.B. Fräsen, den Vorteil, dass mit diesen Verfahren nahezu jede Geometrie gefertigt werden kann und somit keine fertigungstechnisch bedingten Einschränkungen beim Erstellen bzw. Optimieren der Geometrie der Mesiokonstruktion beachtet werden müssen.

Gemäß einem weiteren Aspekt der Erfindung wird eine Mesiokonstruktion bereitgestellt, welche unter Verwendung des oben beschriebenen Verfahrens zum Herstellen einer Mesiokonstruktion gefertigt wurde.

Gemäß einem weiteren Aspekt der Erfindung wird eine Vorrichtung bzw. ein System bereitgestellt, welche bzw. welches dafür eingerichtet ist, das in einem der vorhergehenden Absätze definierte und erläuterte Verfahren zum Erstellen einer Geometrie einer Mesiokonstruktion und/oder zum Herstellen einer Mesiokonstruktion auszuführen.

Gemäß einem weiteren Aspekt der Erfindung wird ein computerlesbares Medium mit durch einen Computer ausführbaren Programm-Code-Anweisungen zum Ausführen des in einem der vorhergehenden Absätze definierten und erläuterten Verfahren zum Erstellen einer Geometrie einer Mesiokonstruktion und/oder zum Herstellen einer Mesiokonstruktion bereitgestellt.

Gemäß einem weiteren Aspekt der Erfindung wird ein Computerprogramm mit Programm-code-Mitteln zum Durchführen des in einem der vorhergehenden Absätze definierten und erläuterten Verfahrens zum Erstellen einer Geometrie einer Mesiokonstruktion und/oder zum Herstellen einer Mesiokonstruktion bereitgestellt.

Im Folgenden wird die Erfindung unter Bezug auf mehrere Ausführungsbeispiele und die beigefügte Zeichnung näher erläutert. In der Zeichnung zeigt:
- Figur 1: ein erstes Beispiel für eine Mesiokonstruktion; und
- Figur 2: ein zweites Beispiel für eine Mesiokonstruktion.

Vorab soll die Verwendung der Begriffe "Suprakonstruktion" und "Mesiokonstruktion", näher erläutert werden.

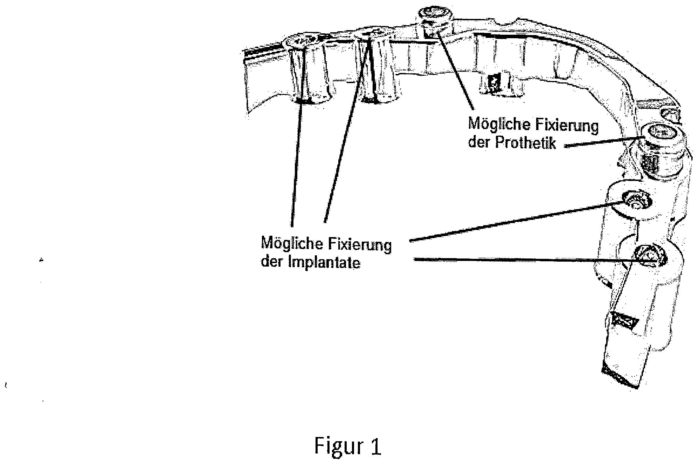

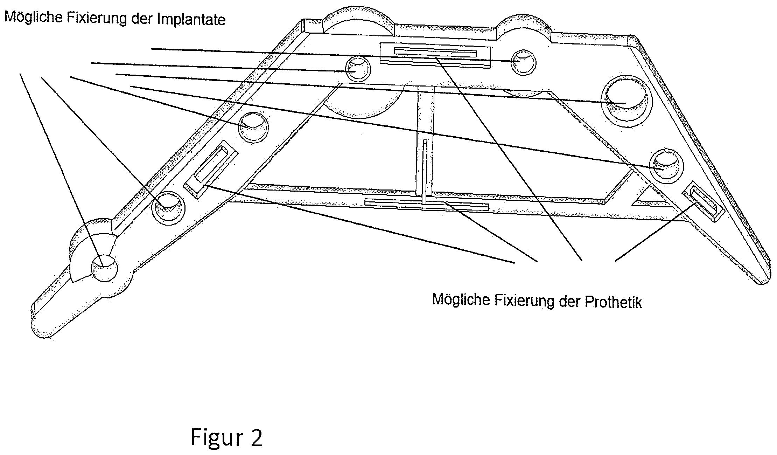

Als Suprakonstruktion werden üblicherweise alle Teile bezeichnet, welche auf den Implantaten bzw. Abutments aufgesetzt bzw. befestigt werden. Als Mesiokonstruktion wird ein Zwischenglied bezeichnet, beispielsweise Stege, Geschiebe oder Sonderdesigns welches zwischen den Implantaten und der Prothese bzw. dem Zahnersatz angeordnet wird. Somit schließt der Begriff Suprakonstruktion beispielsweise sowohl die Mesiokonstruktion, als auch die Prothese mit ein. Jedoch wird diese Unterscheidung nicht immer streng vorgenommen, so dass manchmal auch nur das Zwischenglied, also beispielsweise ein Steg oder Geschiebe, als Suprakonstruktion bezeichnet wird. Auch gibt es im Englischen kein exaktes Pendant für den deutschen Begriff "Mesiokonstruktion". Der englische Begriff "superstructure" kann somit auch nur das Zwischenglied, insbesondere den Steg oder das Geschiebe, bezeichnen. Die Figuren 1 und 2 zeigen verschiedene Beispiele für Mesiokonstruktionen.

Optimierungsverfahren erlauben es, Geometrien in Bezug auf definierte Zielgrößen zu optimieren. Dabei lassen sich zusätzliche Bedingungen definieren, die bei der Optimierung berücksichtigt werden sollen. Ein solches Optimierungsverfahren ist z.B. die Topologieoptimierung. Dabei werden ein Bauraum, eine Lasteinwirkung und mögliche Fixpunkte vorgegeben. Darauf basierend berechnet ein Computer unter Beachtung von Zielfunktionen und Zwangsbedingungen eine Geometrie, die so ausgelegt ist, dass z.B. bei möglichst geringem Volumen (bzw. Gewicht) oder anderen Zielvorgaben bzw. Zielfunktionen unter Einhaltung mindestens einer Zwangsbedingung (z.B. maximal zulässige Spannung) die beste geometrische Struktur entsteht, in dem Sinne, dass die Last ideal abgeleitet wird. Dazu werden alle Bereiche entfernt, die nicht oder nur unwesentlich zur Lastaufnahme beitragen, wobei dies unter Einhaltung der Zwangsbedingung (z.B. wird ein vorgegebener Spannungswert nicht überschritten) erfolgt. Alternativ könnte auch als Zielfunktion die Nachgiebigkeit minimiert werden, wobei eine Volumenreduktion von beispielsweise 70% (Zwangsbedingung) vorgegeben wird.

Dieses Verfahren soll nun für die Konstruktion von Mesiokonstruktionen, die allgemein zur Befestigung von Zahnprothesen am Kiefer dienen, verwendet werden.

Die Topologieoptimierung soll den bisherigen Prozess komplett neu gestalten. Dabei gibt der Zahnarzt mögliche Positionen für die Implantate vor. Auf Basis des Mundinnenraumes und der Zahnprothese wird dann ein möglicher Designraum (Bauraum) für die Suprakonstruktion definiert. Als zusätzliche Information werden dann noch die Position(en) und die Beträge der Krafteinleitung definiert. Aus diesen Informationen berechnet dann der Computer über die Topologieoptimierung und weiteren Verfahren wie z.B. der Finiten-Element-Methode die optimale Geometrie der Suprakonstruktion, so dass z.B. ein minimales Gewicht, bei maximaler Steifigkeit oder eine definierte Lebensdauer erreicht wird.

Dadurch erhält man eine biomechanisch optimierte Form der Suprakonstruktion und ggf. weitere Informationen, wie z.B. darüber, welches Implantat bzw. welche Implantate nicht benötigt wird/werden, da über dieses/diese keine Lasteinleitung erfolgt.

Ein weiterer Effekt ist, dass ein CAD-Konstrukteur (z.B. Zahntechniker) nicht oder nur in begrenztem Umfang benötigt wird, da die bisher manuelle Zeichnung der Suprakonstruktion in den speziellen CAD-Programmen weitgehend von einem Computeralgorithmus übernommen wird.

Die automatisch berechnete Suprakonstruktion ist auch, abgesehen vom definierten Bauraum, kaum geometrischen Zwängen unterlegen, wenn sie über 3D-Fertigungsverfahren hergestellt wird, mit welchen sich nahezu jede Geometrie fertigen lässt.

Bei der Dimensionierung der Mesiokonstruktion und der Definition der (zusätzlich) benötigten Implantate stützt sich der Zahntechniker bisher üblicherweise auf sein Wissen und seine Erfahrung oder auch auf Erfahrungswerte anderer Zahntechniker. Die jeweiligen individuellen biomechanischen Eigenschaften des Kiefers werden dabei jedoch kaum oder zumindest zu wenig berücksichtigt und auch die Statik der Mesiokonstruktion wird in den meisten Fällen nicht exakt berechnet.

Insbesondere bei der Erstellung der Geometrie einer Mesiokonstruktion für einen "unnormalen" Kiefer, d.h. einen Kiefer, bei dem Knochenareale z.B. aufgrund einer Tumorresektion fehlen, ist das erfindungsgemäße Verfahren besonders hilfreich. In einem solchen Fall können die für die Mesiokonstruktion notwendigen Implantate im Knochen nur an bestimmten Stellen verankert werden, was unter Umständen zu einer schlechten Lastableitung führen kann und eine besondere Geometrie der Mesiokonstruktion, ein sogenanntes "Sonderdesign", erforderlich macht. Ein Beispiel für ein derartiges Sonderdesign zeigt Figur 2.

Ein manuelles Erstellen der Geometrie eines derartigen Sonderdesigns für eine Mesiokonstruktion mit Hilfe eines CAD-Programmes ohne Berücksichtigung der biomechanischen Eigenschaften des Kiefers und der Statik der Mesiokonstruktion kann leicht zu einer sehr ungünstigen Lastverteilung bzw. Lastableitung führen.

Ferner besteht die Gefahr, dass beim manuellen Erstellen der Geometrie eines derartigen Sonderdesigns für eine Mesiokonstruktion mit Hilfe eines CAD-Programmes ohne Berücksichtigung der biomechanischen Eigenschaften des Kiefers und der Statik der Mesiokonstruktion Implantate geplant und gesetzt werden, welche keine Last aufnehmen, d.h. Implantate, auf die beim Kauen mit eingesetzter Zahnprothese fast überhaupt keine oder nur sehr geringe Kräfte wirken, und somit das Einsetzen dieser Implantate für das Fixieren der Mesiokonstruktion nicht erforderlich gewesen wäre.

Zudem werden insbesondere bei diesen Sonderfällen die Mesiokonstruktionen oder Teile hiervon vom jeweiligen Zahntechniker häufig stärker dimensioniert, als physikalisch erforderlich wäre, um sicherzustellen, dass die Mesiokonstruktion auf jeden Fall ausreichend stabil ist. Dies führt zu Mehrkosten, und kann sich auch in ästhetischer Hinsicht nachteilig auswirken.

Daher ist das erfindungsgemäße Verfahren beim Erstellen der Geometrie einer Mesiokonstruktion für einen "unnormalen" Kiefer, der ein Sonderdesign erforderlich macht, besonders hilfreich.

Im Folgenden soll das erfindungsgemäße Verfahren näher erläutert werden.

An einem Rechner wird mit Hilfe eines auf dessen Speichereinrichtung oder einer beliebigen anderen Speichereinrichtung gespeicherten Simulations-Softwareprogramms, wie z.B. ANSYS, (Computerprogrammprodukt) eine auf einer Finite-Elemente-Methode (FEM bzw. Finite Elements Method) beruhende Simulation durchgeführt.

Ein FEM-Netz kann beispielsweise mit Hilfe eines auf einer Speichereinrichtung des Rechners oder auf einer beliebigen anderen Speichereinrichtung eines separaten Rechners gespeicherten FEM-Simulations-Softwareprogramms erfolgen, bzw. einer entsprechenden FEM-Vernetzungssoftware.

Dabei können z.B. beim späteren realen Einsatz der Mesiokonstruktion (d.h. beim Kauen mit eingesetzter Prothese) auftretende mechanische Belastungen simuliert werden.

Ausgehend von einem 3D-Bauraum (Designraum), welcher die maximale räumliche Ausdehnung der Mesiokonstruktion definiert, wird die oben beschriebene Simulation iterativ durchgeführt, wobei bei jeder Iteration Bereiche, die nicht oder nur in sehr geringem Maße zur Lastaufnahme beitragen, entfernt werden. Genauer gesagt, wird jedem Element der zu optimierenden Geometrie eine Pseudodichte mit einem Wert zwischen 0 und 1 zugewiesen, welche beschreibt, ob das jeweilige Element im Designraum notwendig ist (Pseudodichte 1) oder vernachlässigt werden kann (Pseudodichte 0).

Der behandelnde Zahnarzt oder Kieferchirurg gibt vorteilhafterweise den 3D-Bauraum unter Berücksichtigung praktischer und ästhetischer Gesichtspunkte vor. So sollte die Prothese noch geeignet positionierbar sein, die Zunge genügend Raum und Bewegungsfreiheit haben und die Mesiokonstruktion im Normalfall nicht zu sehen sein. Demnach sollte der Zahnarzt/ Kieferchirurg einen möglichst großen 3D-Bauraum, der jedoch noch die oben genannten Kriterien erfüllt, als Ausgangpunkt für die Optimierung vorgeben.

Die schrittweise biomechanische Optimierung der Geometrie der Mesiokonstruktion erfolgt vorteilhafterweise automatisch mit Hilfe des Topologieoptimierungsprogramms. In jeder Iteration wird der verbleibende 3D-Bauraum gemäß den Vorgaben, d.h. Zielfunktion(en) und Zwangsbedingung(en), weiter verkleinert bzw. angepasst bis in der letzten Iteration eine biomechanisch optimierte Geometrie erzielt wird.

Nach erfolgter Optimierung sind dem Bauraum Pseudodichten mit Werten zwischen 0 und 1 zugewiesen. In der Regel liegt der Großteil der Werte nahe bei 0 oder 1. Jedoch sind Werte dazwischen auch möglich. Die Verteilung der Werte der Pseudodichte hängt von der jeweiligen Optimierung ab.

Die optimierte Geometrie wird nun exportiert, wobei nur die Teile der Geometrie exportiert werden, deren Pseudodichte in einem bestimmten Bereich (z.B. 0,8 bis 1) liegen, der von einem Anwender oder einer bestimmten Logik definiert wird. Somit bestimmt der Anwender oder die Logik, wieviel Material tatsächlich exportiert wird, und somit das Aussehen der optimierten Geometrie.

Die exportierte topologieoptimierte Geometrie wird dann geglättet.

Alternativ könnte ein zusätzliches Optimierungsverfahren z.B. die sogenannte Shapeoptimization zur Spannungsreduktion für die Nachbearbeitung der optimierten Geometrie verwendet werden. Im Gegensatz zur Topologieoptimierung wird bei der Shapeoptimization die Oberfläche in einem definierten Bereich verformt (gemorpht), um Spannungsspitzen weiter abzubauen.

Für die Optimierung der Mesiokonstruktion werden mögliche Positionen zum Fixieren der Mesiokonstruktion definiert, die von der Optimierung ausgeschlossen werden, also in jedem Fall Teil der optimierten Geometrie der Mesiokonstruktion sind.

Die möglichen Positionen zum Fixieren der Mesiokonstruktion können mögliche Positionen für ein oder mehrere Implantate einschließen und/oder für den Fall, dass der Patient noch über mindestens einen eigenen Zahn verfügt, der sich, nach entsprechendem Präparieren, für ein Befestigen der Mesiokonstruktion eignet, die Position des vorhandenen Zahnes bzw. die Positionen der vorhandenen Zähne einschließen, der/die zum Fixieren der Mesiokonstruktion verwendet wird/werden.

Die möglichen Positionen für ein Einsetzen von Implantaten zum Fixieren der Mesiokonstruktion werden vorteilhafterweise vom behandelnden Zahnarzt oder Kieferchirurgen vorgegeben. Er ermittelt diese zweckmäßigerweise anhand geeigneter Untersuchungen der Knochenstruktur des Oberkiefers und/oder Unterkiefers oder anhand bereits vorhandener Befunde, so dass ein zuverlässiges Fixieren der Mesiokonstruktion und damit ein guter Sitz der daran befestigten Prothese auch bei Belastung der Prothese gewährleistet ist.

Die Position(en) des noch vorhandenen Zahnes bzw. der noch vorhandener Zähne, der/die sich, nach entsprechendem Präparieren, für ein Befestigen der Mesiokonstruktion eignet/eignen, gibt ebenfalls der Zahnarzt oder Kieferchirurg vor. Gegebenenfalls kann er die Positionen des vorhandenen Zahnes bzw. der vorhandenen Zähne nochmals aktuell bestimmen, um eine größtmögliche Präzision zu erzielen. Werden zum Befestigen der Mesiokonstruktion, an welcher die Prothese fixiert werden soll, zusätzlich ein oder mehrere Implantate benötigt, so werden eine oder mehrere mögliche Positionen für diese vom Zahnarzt/ Kieferchirurg, wie bereits oben beschreiben, vorgegeben.

Zudem werden für die Optimierung der Mesiokonstruktion mögliche Positionen oder Bereiche definiert, welche sich für ein Fixieren der Zahnprothese an der Mesiokonstruktion eignen.

Die Positionen oder Bereiche, an denen die Zahnprothese befestigt werden kann, hängen von der Art und Beschaffenheit, also der individuellen Ausgestaltung, der Zahnprothese und vom Mesiokonstruktionstyp, z.B. Steg, Geschiebe oder Sonderdesign, ab. Auch die Positionen oder Bereiche, an denen die Zahnprothese befestigt werden kann, werden vorteilhafterweise vom behandelnden Zahnarzt /Kieferchirurgen bzw. Prothetiker vorgegeben.

Sollte die jeweilige Mesiokonstruktion so beschaffen sein, dass die Position der Fixierpunkte bzw. Fixierbereiche für die Prothese variabel, also nicht fest vorgegeben ist, so kann auch die Anordnung dieser Fixierpunkte bzw. Fixierbereiche für die Prothese biomechanisch optimiert werden.

In einer bevorzugten Ausführungsform der Erfindung ist die Anzahl der möglichen Positionen für Implantate größer als die Anzahl der für das Fixieren der Mesiokonstruktion erforderlichen Implantate, so dass bei der Optimierung der Geometrie der Mesiokonstruktion diejenigen Positionen für Implantate aus der Gesamtzahl der möglichen Positionen für Implantate ermittelt werden können, welche am besten für das Fixieren der Mesiokonstruktion geeignet sind. Somit wird auch die Anordnung der Implantate für das Fixieren der Mesiokonstruktion biomechanisch optimiert, indem eine geeignete Untermenge an Positionen für Implantate aus der Gesamtzahl der möglichen Positionen für Implantate ermittelt wird. So können einerseits beispielsweise mögliche Positionen für Implantate, an welchen keine oder keine wesentliche Lastaufnahme stattfindet, entfernt werden und andererseits eine zu hohe Belastung eines einzelnen Implantats bzw. eine zu hohe Lastaufnahme an einem einzelnen Implantat vermieden werden.

Hierzu wird der Bereich der Mesiokonstruktion betrachtet, welcher mit dem entsprechenden Implantat in Kontakt kommt, d.h. der Bereich, über welchen die Krafteinleitung/- aufnahme zwischen Implantat und Mesiokonstruktion direkt erfolgt. Findet an einem bestimmten Bereich der Mesiokonstruktion keine (wesentliche) Lastaufnahme statt, so findet auch über das entsprechende Implantat, das mit dem bestimmten Bereich der Mesiokonstruktion in Kontakt kommt, keine (wesentliche) Lastaufnahme statt.

Vorteilhafterweise kann für die Optimierung der Geometrie der Mesiokonstruktion mindestens eines der folgenden Ziele bzw. Zielfunktionen vorgegeben werden:
Das Volumen bzw. die Masse der Mesiokonstruktion kann minimiert werden, indem beispielsweise Bereiche, die nicht oder nur wenig zur Lastaufnahme bzw. Lastabtragung beitragen, entfernt werden.

Es kann die Nachgiebigkeit der Mesiokonstruktion minimiert werden, wobei dies für ein beliebiges Belastungsszenario, also z.B. für eine einzelne vorgegebene Last oder für ein Lastkollektiv erfolgen kann. Dabei basiert das verwendete Belastungsszenario auf der Beißkraft (oder Kaukraft) der Person, für welche die Mesiokonstruktion und die Zahnprothese angefertigt werden.

Somit kann die Geometrie der Mesiokonstruktion individualisiert sowohl für eine statische Beißkraft einer bestimmten Person optimiert werden, als auch für mehrere Lastfälle, die beispielsweise einen Kauzyklus einer bestimmten Person abbilden, optimiert werden.

Ferner kann die Verschiebung an einem bestimmten Punkt oder Bereich der Mesiokonstruktion, der beliebig festgelegt werden kann, entsprechend einer Zielfunktion und/oder Zwangsfunktion minimiert werden.

Auch die Reaktionskraft an den möglichen Positionen zum Fixieren der Mesiokonstruktion, z.B. an allen Implantaten oder auch an einem einzelnen Implantat, kann minimiert werden.

Zweckmäßigerweise kann bei der Optimierung der Geometrie der Mesiokonstruktion mindestens eine vorgegebene Bedingung, welche oft auch als Zwangsbedingung bezeichnet wird, berücksichtigt werden.

Beispielsweise kann mindestens ein Fixpunkt der Geometrie der Mesiokonstruktion als zusätzliche Bedingung vorgegeben sein. Bei einer Vorgabe von mindestens einem Fixpunkt ist dieser mindestens eine Fixpunkt zwingend in der optimierten Geometrie der Mesiokonstruktion enthalten.

Auch kann eine zulässige Maximalbelastung einzelner Abschnitte der Mesiokonstruktion vorgegeben sein.

Hierbei kann die Optimierung der Geometrie der Mesiokonstruktion durch die Angabe einer zu erwartenden Maximalbelastung der gesamten Mesiokonstruktion oder, genauer gesagt, einer zu erwartenden maximalen Gesamtlastaufnahme über die möglichen Positionen zum Fixieren der Zahnprothese, bezüglich eines Belastungsszenarios der Person, für welche die Mesiokonstruktion und Zahnprothese angefertigt wird, individualisiert werden.

So kann die Mesiokonstruktion für eine Person mit eher geringer maximaler Beißkraft weniger stark bzw. kleiner dimensioniert werden, was insbesondere für Personen mit einem kleinen Mundinnenraum vorteilhaft ist. Umgekehrt kann für eine Person mit großer maximaler Beißkraft die Mesiokonstruktion stärker bzw. größer dimensioniert werden, um so eine Überbelastung einzelner Abschnitte der Mesiokonstruktion und damit ein Verformen oder gar Brechen der Mesiokonstruktion zu vermeiden.

Stehen verschiedene Materialien für die Mesiokonstruktion zur Wahl, so können deren Eigenschaften bei der Optimierung der Geometrie der Mesiokonstruktion mit einbezogen werden, indem die zulässige Maximalbelastung einzelner Abschnitte der Mesiokonstruktion an das jeweilige Material angepasst wird.

Ferner kann eine Überbelastung einzelner Implantate vermieden werden, indem eine zulässige maximale Reaktionskraft an den möglichen Positionen zum Fixieren der Mesiokonstruktion, also beispielsweise eine zulässige Maximalbelastung eines einzelnen Implantats, vorgegeben wird. Auch hier kann durch die Angabe einer zu erwartenden Maximalbelastung der gesamten Mesiokonstruktion oder, genauer gesagt, einer zu erwartenden maximalen Gesamtlastaufnahme über die möglichen Positionen zum Fixieren der Zahnprothese, die Optimierung der Mesiokonstruktion bezüglich eines Belastungsszenarios der Person, für welche die Mesiokonstruktion und Zahnprothese angefertigt werden, individualisiert werden.

Ist auch nach erfolgter Optimierung der Geometrie der Mesiokonstruktion eine höhere Belastung eines bestimmten Implantats nicht zu vermeiden, so kann dieses Implantat noch entsprechend angepasst werden. Insbesondere kann z.B. die Länge oder der Durchmesser des Implantats vergrößert werden.

Auch das zulässige maximale Volumen bzw. das zulässige maximale Gewicht der Mesiokonstruktion, zulässige maximale Spannungen und/oder eine zulässige maximale Nachgiebigkeit der Mesiokonstruktion können als zusätzliche Bedingung vorgegeben sein.

Stehen verschiedene Materialien für die Mesiokonstruktion zur Wahl, so können diese auch hier bei der Optimierung der Geometrie der Mesiokonstruktion mit einbezogen werden, indem das Maximalgewicht, die zulässigen maximalen Spannungen und/oder die zulässige maximale Nachgiebigkeit der Mesiokonstruktion an das jeweilige Material angepasst wird/werden.

Bei Vorgabe einer Kombination verschiedener zusätzlicher, materialabhängiger Bedingungen, wie z.B. der zulässigen Maximalbelastung einzelner Abschnitte der Mesiokonstruktion, des zulässigen maximalen Gewichts der Mesiokonstruktion, der zulässigen maximalen Spannungen und/oder der zulässigen maximalen Nachgiebigkeit der Mesiokonstruktion, kann für jedes zur Verfügung stehende Material die zugehörige Kombination der an das jeweilige Material angepassten Bedingungen vorgegeben bzw. getestet werden. Somit kann bei der Optimierung der Geometrie der Mesiokonstruktion auch das zu verwendende Material "optimiert" werden, d.h. das für die individuellen Vorgaben für die Mesiokonstruktion am besten geeignete Material ermittelt werden.

Vorteilhafterweise können die obengenannten Ziele (Zielfunktionen) und Bedingungen (Zwangsbedingungen) in geeigneter Weise bzw. sinnvoll kombiniert werden.

So kann eine Minimierung der Nachgiebigkeit für eine vorgegebene Last bzw. ein vorgegebenes Lastkollektiv und eine vorgegebene Volumenreduktion (z.B. 70%) erfolgen oder eine Minimierung des Volumens bzw. der Masse kann für eine zulässige maximale Spannung (und daraus abgeleitet die Lebensdauer) und/oder für eine zulässige maximale Reaktionskraft (z.B. 30N) an den Implantaten erfolgen.

Das zu erwartende maximale Belastungsszenario der jeweiligen Person kann mit einer individuellen Messung, einer Vorberechnung, z.B. mittels FEM, oder mit Hilfe von Fachliteratur ermittelt bzw. geschätzt werden.

In einer weiteren bevorzugten Ausführungsform kann die Mesiokonstruktion Teil einer einteiligen Konstruktion sein, welche die Mesiokonstruktion und einen Zahnersatz umfasst. So kann bei einer einteiligen Ausführung von Mesiokonstruktion und Zahnersatz die Geometrie des Teils, der der Mesiokonstruktion entspricht, mit Hilfe des erfindungsgemäßen Verfahrens optimiert werden.

Nach erfolgter Optimierung sind dem Bauraum Pseudodichten mit Werten zwischen 0 und 1 zugewiesen. In der Regel liegt der Großteil der Werte nahe bei 0 oder 1. Jedoch sind Werte dazwischen auch möglich. Die Verteilung der Werte der Pseudodichte hängt von der jeweiligen Optimierung ab.

Die optimierte Geometrie wird nun exportiert, wobei nur die Teile der Geometrie exportiert werden, deren Pseudodichte in einem bestimmten Bereich (z.B. 0,8 bis 1) liegen, der von einem Anwender oder einer bestimmten Logik definiert wird. Somit bestimmt der Anwender oder die Logik, wieviel Material tatsächlich exportiert wird, und somit das Aussehen der optimierten Geometrie.

Die exportierte topologieoptimierte Geometrie wird geglättet und ggf. noch beispielsweise von einem Zahntechniker nachbearbeitet, wobei der Zahntechniker die Möglichkeit hat, auch die Position der Fixierungspunkte für Implantate und Zahnprothese bei Bedarf noch abzuändern.

Alternativ könnte ein zusätzliches Optimierungsverfahren z.B. die sogenannte Shapeoptimization zur Spannungsreduktion für die Nachbearbeitung der optimierten Geometrie verwendet werden. Im Gegensatz zur Topologieoptimierung wird bei der Shapeoptimization die Oberfläche in einem definierten Bereich verformt (gemorpht), um Spannungsspitzen weiter abzubauen.

Die geglätteten und ggf. nachbearbeiteten Daten werden daraufhin in ein geeignetes Geometrie Format, z.B. in eine STL-Datei oder CAD-Datei, umgewandelt.

Auf deren Basis kann bei Bedarf eine CAM- (Computer-Aided-Manufacturing-) Datei erzeugt werden.

Basierend auf den erzeugten Daten, z.B. STL-, CAD-, CAM-Daten oder ein beliebiges anderes von der jeweiligen Vorrichtung zum Fertigen benötigtes Dateiformat, kann die Mesiokonstruktion mit Hilfe eines geeigneten Fertigungsverfahrens, z.B. 3D-Druck bzw. ein additives Fertigungsverfahren oder Fräsen, gefertigt werden.

Zweckmäßigerweise kann die Mesiokonstruktion aus einem Metall bzw. einer Metalllegierung oder einem Kunststoff gefertigt werden.

Vorteilhafterweise können Kobalt, Chrom, Molybdän, Titan, oder Legierungen dieser Metalle mit einem weiteren Metall, insbesondere Molybdän, verwendet werden. Ferner können Zirkoniumoxid oder auch Kunststoffe verwendet werden, welche mundverträglich und nicht-toxisch sind.

Für das Fertigen bzw. Herstellen der Mesiokonstruktion basierend auf der zuvor erstellten Geometrie der Mesiokonstruktion für eine Zahnprothese kann abhängig von dem gewünschten Material für die Mesiokonstruktion ein geeignetes Fertigungs- bzw. Herstellungsverfahren gewählt werden. Hierbei können generative Fertigungsverfahren, auch additive Fertigungsverfahren oder 3D-Druck genannt, wie z.B. Sintern, Lasersintern, selektives Laserschmelzen oder Elektronenstrahlschmelzen für Metalle und Metalllegierungen und Stereolithographie oder Fused Deposition Modeling für Kunststoffe verwendet werden. Mesiokonstruktionen aus Metall oder Metalllegierungen können auch gefräst werden, wobei hier die fertigungstechnisch bedingten Einschränkungen beim Fräsen vorteilhafterweise schon beim Erstellen der Geometrie der Mesiokonstruktion berücksichtigt werden.

Generative Fertigungsverfahren haben gegenüber anderen Fertigungsverfahren, wie z.B. Fräsen, den Vorteil, dass mit diesen Verfahren nahezu jede Geometrie gefertigt werden kann und somit keine fertigungstechnisch bedingten Einschränkungen beim Erstellen bzw. Optimieren der Geometrie der Mesiokonstruktion beachtet werden müssen.

## Patentansprüche

1. Verfahren zum Erstellen einer Geometrie einer Mesiokonstruktion für eine Zahnprothese mit Hilfe eines Softwareprogramms, wobei das Verfahren die folgenden Schritte aufweist:
Empfangen von ersten 3D-Daten, welche einen 3D-Bauraum für eine Mesiokonstruktion definieren,
Empfangen von zweiten 3D-Daten, welche mögliche Positionen zum Fixieren der Mesiokonstruktion definieren,
Empfangen von dritten 3D-Daten, welche mögliche Positionen oder Bereiche zum Fixieren der Zahnprothese an der Mesiokonstruktion definieren, und
Erstellen einer optimierten Geometrie der Mesiokonstruktion mittels eines Optimierungsverfahrens, wobei, ausgehend von dem 3D-Bauraum, den möglichen Positionen zum Befestigen der Mesiokonstruktion und den möglichen Positionen oder Bereichen zum Fixieren der Zahnprothese an der Mesiokonstruktion, die Geometrie der Mesiokonstruktion optimiert wird, indem mit Hilfe des Softwareprogramms automatisch Bereiche, welche nicht oder nur unwesentlich zur Lastaufnahme beitragen, aus dem 3D-Bauraum entfernt werden.

2. Verfahren nach Anspruch 1, wobei das Optimierungsverfahren ein Topologieoptimierungsverfahren einschließt.

3. Verfahren nach Anspruch 2, wobei die optimierte Geometrie der Mesiokonstruktion mit einem Computer unter Zuhilfenahme eines Topologieoptimierungsverfahrens berechnet wird.

4. Verfahren nach einem der vorhergehenden Ansprüche, wobei der 3D-Bauraum die maximale räumliche Ausdehnung der Mesiokonstruktion definiert.

5. Verfahren nach einem der Ansprüche 1 bis 3, wobei der 3D-Bauraum eine Ausgangsform für eine Mesiokonstruktion ist.

6. Verfahren nach Anspruch 1, wobei die Bereiche, welche nicht oder nur unwesentlich zur Lastaufnahme beitragen, ermittelt werden, indem die auf einzelne Bereiche der Mesiokonstruktion wirkenden Kräfte und/oder Verschiebungen simuliert werden.

7. Verfahren nach einem der vorhergehenden Ansprüche, wobei die möglichen Positionen zum Fixieren der Mesiokonstruktion mögliche Positionen von Implantaten und/oder Positionen von vorhandenen Zähnen einschließen.

8. Verfahren nach Anspruch 7, wobei die Anzahl der möglichen Positionen von Implantaten größer ist als die Anzahl der für das Fixieren der Mesiokonstruktion erforderlichen Implantate,

9. Verfahren nach Anspruch 8, wobei die Geometrie der Mesiokonstruktion optimiert wird, indem mögliche Positionen von Implantaten, an welchen keine oder keine wesentliche Lastaufnahme stattfindet, entfernt werden.

10. Verfahren nach einem der vorhergehenden Ansprüche, wobei für die Optimierung der Geometrie der Mesiokonstruktion mindestens eines der folgenden Ziele vorgegeben wird:
Minimierung des Volumens der Mesiokonstruktion;
Minimierung des Gewichts der Mesiokonstruktion;
Minimierung der Nachgiebigkeit der Mesiokonstruktion;
Minimierung der Verschiebung an einem Punkt oder Bereich; und/oder
Minimierung der Reaktionskraft an den möglichen Positionen zum Fixieren der Mesiokonstruktion.

11. Verfahren nach einem der vorhergehenden Ansprüche, wobei bei der Optimierung der Geometrie der Mesiokonstruktion mindestens eine vorgegebene Bedingung berücksichtigt wird, wobei die mindestens eine vorgegebene Bedingung mindestens eine der folgenden Bedingungen einschließt:
ein oder mehrere Fixpunkte der Geometrie der Mesiokonstruktion;
zulässige Maximalbelastung einzelner Abschnitte der Mesiokonstruktion;
zulässige maximale Reaktionskraft an den möglichen Positionen zum Fixieren der Mesiokonstruktion;
zulässige maximale Reaktionskraft an den möglichen Positionen oder Bereichen zum Fixieren der Zahnprothese an der Mesiokonstruktion;
maximal zulässiges Volumen der Mesiokonstruktion;
maximal zulässiges Gewicht der Mesiokonstruktion;
zulässige maximale Nachgiebigkeit der Mesiokonstruktion;
zulässige maximale Spannungen und/oder
fertigungstechnisch bedingte Einschränkungen für die Geometrie und/oder Struktur der Mesiokonstruktion.

12. Verfahren zum Herstellen einer Mesiokonstruktion für eine Zahnprothese, wobei das Verfahren die folgenden Schritte aufweist:
Erstellen einer Geometrie einer Mesiokonstruktion für eine Zahnprothese gemäß dem Verfahren nach einem der vorhergehenden Ansprüche und
Fertigen der Mesiokonstruktion für eine Zahnprothese basierend auf der erstellten Geometrie der Mesiokonstruktion für eine Zahnprothese mit Hilfe eines generativen Fertigungsverfahrens oder mittels Fräsen.

13. Computerlesbares Medium mit durch einen Computer ausführbaren Programm-Code-Anweisungen zum Ausführen eines Verfahrens nach einem der Ansprüche 1 - 12.

## Claims

1. A method of developing a geometry of a mesostructure for a dental prosthesis by means of a software program, the method comprising the following steps:
receiving first 3D data defining a 3D installation space for a mesostructure,
receiving second 3D data defining possible positions for attaching the mesostructure,
receiving third 3D data defining possible positions or regions for attaching the dental prosthesis to the mesostructure, and
developing an optimized geometry of the mesostructure by means of an optimization technique, wherein starting from the 3D installation space, the possible positions for attaching the mesostructure and the possible positions or regions for attaching the dental prosthesis to the mesostructure, the geometry of the mesostructure is optimized by automatically removing, by means of the software program, those regions from the 3-D installation space which do not contribute or contribute only slightly to load absorption.

2. The method according to claim 1, wherein the optimization technique includes a topology optimization technique.

3. The method according to claim 2, wherein the optimized geometry of the mesostructure is calculated by a computer with the aid of a topology optimization technique.

4. The method according to one of the previous claims, wherein the 3D installation space defines the maximum spatial expansion of the mesostructure.

5. The method according to one of claims 1 to 3, wherein the 3D installation space is a base form of a mesostructure.

6. The method according to claim 1, wherein those regions are ascertained which do not contribute or contribute only slightly to load absorption, by simulating the forces and/or shiftings acting on individual regions of the mesostructure.

7. The method according to one of the previous claims, wherein the possible positions for attaching the mesostructure include possible positions of implants and/or positions of existing teeth.

8. The method according to claim 7, wherein the number of possible positions of implants is larger than the number of implants necessary for attaching the mesostructure.

9. The method according to claim 8, wherein the geometry of the mesostructure is optimized, by removing possible positions of implants on which no or no significant load absorption takes place.

10. The method according to one of the previous claims, wherein for optimizing the geometry of the mesostructure at least one of the following goals is given:
minimizing the volume of the mesostructure;
minimizing the weight of the mesostructure;
minimizing the flexibility of the mesostructure;
minimizing the shifting at one point or region; and/or
minimizing the reaction force in the possible positions for attaching the mesostructure.

11. The method according to one of the previous claims, wherein in the optimization of the geometry of the mesostructure at least one given condition is taken into consideration, the at least one given condition including at least one of the following conditions:
one or several fixed points of the geometry of the mesostructure;
permissible maximum load of individual regions of the mesostructure;
permissible maximum reaction force at the possible positions for attaching the mesostructure;
permissible maximum reaction force at the possible positions or regions for attaching the dental prosthesis to the mesostructure;
permissible maximum volume of the mesostructure;
permissible maximum weight of the mesostructure;
permissible maximum flexibility of the mesostructure;
permissible maximum stresses and/or
production-related limitations for the geometry and/or the structure of the mesostructure.

12. A method of manufacturing a mesostructure for a dental prosthesis, the method comprising the following steps:
developing a geometry of a mesostructure for a dental prosthesis according to the method according to one of the previous claims, and
manufacturing the mesostructure for a dental prosthesis based on the developed geometry of the mesostructure for a dental prosthesis with the aid of a generative manufacturing method or by means of milling.

13. A computer-readable medium comprising program code instructions executable by a computer for performing a method according to one of claims 1 - 12.

## Revendications

1. Procédé de création d'une géométrie d'une mésostructure pour une prothèse dentaire à l'aide d'un programme logiciel, le procédé comprenant les étapes suivantes :
réception de premières données 3D définissant un espace de construction 3D pour une mésostructure,
réception de deuxièmes données 3D définissant des positions possibles pour la fixation de la mésostructure,
réception de troisièmes données 3D définissant des positions ou des zones possibles pour la fixation de la prothèse dentaire sur la mésostructure, et
création d'une géométrie optimisée de la mésostructure au moyen d'un procédé d'optimisation, dans lequel, à partir de l'espace de construction 3D, des positions possibles pour la fixation de la mésostructure et des positions ou zones possibles pour la fixation de la prothèse dentaire sur la mésostructure, la géométrie de la mésostructure est optimisée en éliminant automatiquement de l'espace de construction 3D, à l'aide du programme logiciel, les zones qui ne contribuent pas ou seulement de manière insignifiante à la reprise de charge.

2. Procédé selon la revendication 1, dans lequel le procédé d'optimisation inclut un procédé d'optimisation topologique.

3. Procédé selon la revendication 2, dans lequel la géométrie optimisée de la mésostructure est calculée par ordinateur à l'aide d'un procédé d'optimisation topologique.

4. Procédé selon l'une des revendications précédentes, dans lequel l'espace de construction 3D définit l'extension spatiale maximale de la mésostructure.

5. Procédé selon l'une des revendications 1 à 3, dans lequel l'espace de construction 3D est une forme de départ pour une mésostructure.

6. Procédé selon la revendication 1, dans lequel les zones ne contribuant pas ou seulement de manière insignifiante à la reprise de charge sont déterminées en simulant les forces et/ou les déplacements agissant sur des zones individuelles de la mésostructure.

7. Procédé selon l'une des revendications précédentes, dans lequel les positions possibles pour la fixation de la mésostructure incluent les positions possibles d'implants et/ou les positions de dents existantes.

8. Procédé selon la revendication 7, dans lequel le nombre de positions possibles d'implants est supérieur au nombre d'implants nécessaires pour la fixation de la mésostructure.

9. Procédé selon la revendication 8, dans lequel la géométrie de la mésostructure est optimisée en éliminant les positions possibles d'implants où il n'y a pas ou pas sensiblement de reprise de charge.

10. Procédé selon l'une des revendications précédentes, dans lequel au moins l'un des objectifs suivants est prédéfini pour l'optimisation de la géométrie de la mésostructure :
minimisation du volume de la mésostructure ;
minimisation du poids de la mésostructure ;
minimisation de la flexibilité de la mésostructure ;
minimisation du déplacement en un point ou une zone ; et/ou
minimisation de la force de réaction aux positions possibles pour la fixation de la mésostructure.

11. Procédé selon l'une des revendications précédentes, dans lequel au moins une condition prédéfinie est prise en compte lors de l'optimisation de la géométrie de la mésostructure, dans lequel ladite au moins une condition prédéfinie inclut au moins l'une des conditions suivantes :
un ou plusieurs points fixes de la géométrie de la mésostructure ;
charge maximale admissible de sections individuelles de la mésostructure ;
force de réaction maximale admissible aux positions possibles pour la fixation de la mésostructure ;
force de réaction maximale admissible aux positions ou zones possibles pour la fixation de la prothèse dentaire sur la mésostructure ;
volume maximal admissible de la mésostructure ;
poids maximal admissible de la mésostructure ;
flexibilité maximale admissible de la mésostructure ;
contraintes maximales admissibles, et/ou
restrictions liées à la technique de fabrication pour la géométrie et/ou la structure de la mésostructure.

12. Procédé de fabrication d'une mésostructure pour une prothèse dentaire, le procédé comprenant les étapes suivantes :
création d'une géométrie d'une mésostructure pour une prothèse dentaire conformément au procédé selon l'une des revendications précédentes, et
fabrication de la mésostructure pour une prothèse dentaire sur la base de la géométrie créée de la mésostructure pour une prothèse dentaire à l'aide d'un procédé de fabrication générative ou par fraisage.

13. Support lisible par ordinateur contenant des instructions de code de programme exécutables par un ordinateur pour mettre en oeuvre un procédé selon l'une des revendications 1 à 12.
